# EUROPEAN PATENT SPECIFICATION

(11) **EP 3 055 521 B1**
(45) Date of publication and mention of the grant of the patent: **21.02.2018**
(21) Application number: 14786821.0
(22) Date of filing: 07.10.2014
(51) Int. Cl.: F01L 1/053, F01L 1/344, F16H 53/04, F01L 13/00, F01L 1/047

(54) **ARRANGEMENT FOR AXIALLY SHIFTING A CAM ASSEMBLY ON A CAM SHAFT**
ANORDNUNG ZUM AXIALEN VERSCHIEBEN EINER NOCKENANORDNUNG AUF EINER NOCKENWELLE
AMÉNAGEMENT POUR LE DÉPLACEMENT AXIAL D'UN ENSEMBLE CAME SUR UN ARBRE À CAMES

(30) Priority: 09.10.2013 GB 201317871
(43) Date of publication of application: 17.08.2016
(73) Proprietor: Eaton S.r.l., 10138 Torino (IT)
(72) Inventor: CECUR, Majo, I-10086 Rivarolo Canavese (IT); ALESSANDRIA, Marco, I-10090 Trana (TO) (IT); RAIMONDI, Emanuele, I-10070 San Francesco Al Campo (TO) (IT); LUBOS, Tomiska, 252 63 Roztoky (CZ)
(74) Representative: Eaton IP Group EMEA
(86) International application number: PCT/EP2014/071460
(87) International publication number: WO 2015/052197

(56) References cited:
- DE-A1- 10 241 920
- DE-A1- 19 520 117
- DE-A1-102004 055 852
- DE-A1-102007 061 353
- DE-A1-102009 034 990
- DE-A1-102010 021 622
- DE-A1-102010 021 903
- DE-A1-102011 002 136
- DE-B3-102008 061 440
- US-A1- 2011 180 029
- US-A1- 2013 025 554

## Description

### Field of the Invention

The present invention relates to an arrangement for axially shifting a cam assembly on a cam shaft.

### Background of the Invention

Variable valve lifting (VVL) and Variable valve timing (VVT) systems are used alone or in combination to vary the opening height and/or opening timing of intake and/or exhaust valves of internal combustion engine cylinders in order to improve one or more of performance, fuel economy and emissions levels. One known type of VVL and/or VVT system uses axial cam shifting. In such a system, a cam piece is arranged on a camshaft so that it can be moved axially along the cam shaft between at least two positions and the opening height and/or timing of a cylinder valve controlled by the cam piece depends upon which of the axial positions the cam piece is in. For example, the cam piece may comprise a first lift lobe for controlling a valve when the cam piece is at a first axial position on a camshaft and a second lift lobe for controlling that valve differently when the cam piece is at a second axial position on a camshaft. In a known system, one of the axial positions of the cam piece corresponds to a 'cylinder deactivation position' and in this position a cam follower remains continuously on a base circle of the cam piece so that the valve remains closed throughout a cylinder cycle.

One known actuator arrangement for shifting one or more cam pieces axially on a cam shaft is described in US2010/0251982. In this arrangement, each cam piece is provided with axial connecting paths in the form of spiral grooves running in the opposite sense to each other. The shifting of a given cam piece is realized according to the construction of the connecting paths by an electro-magnetically controlled activation element that is coupled selectively in the spiral grooves. The axial profile of the spiral groove engaged with the activation element has the result that, during the common (lobe-free) base-circle phase of a cam of the cam piece, the cam piece is shifted in a self-controlled way from one axial position to the next. A separate electro-magnetically controlled activation element is required for each cam piece to be shifted and so the actuator arrangement comprises a relatively large number of components.

US2013025554 discloses a valve drive device comprising a hollow camshaft comprising a cam unit comprising three axially spaced cams. An adjustment sleeve is mounted in the interior of the camshaft and an adjustment shaft is mounted inside the adjustment sleeve. An adjustment contour having an axial stroke is provided on the adjustment sleeve. In the adjustment contour two coupling elements are engaged, a first coupling element being connected to a cam unit and a further coupling element being connected to the camshaft. A rotation device for the adjustment shaft is provided so as to rotate the adjustment shaft together with the adjustment sleeve and thus bring about an axial displacement of the cam unit.

It is desirable to provide an alternative arrangement for axially shifting a cam assembly on a cam shaft.

### Summary of the Invention

According to the invention, there is provided a cam shifting arrangement according to claim 1.

According to the invention there is provided the valve train assembly of claim 11.

Such an arrangement provides for a straightforward and reliable means of axially shifting a cam piece along a camshaft. When used in respect of valve trains that comprises a plurality of cam pieces that need to be axially shifted along a cam shaft, the arrangement negates the requirement of having a separate actuator for each cam piece.

### Brief Description of the Drawing

Figure 1 is a schematic perspective view of components of an internal combustion engine including a valve train assembly;
Figure 2 illustrates a cam arrangement;
Figure 3 is a schematic side view of the internal combustion engine of Figure 1 with the valve train assembly in a first configuration;
Figure 4 is a schematic side view of the internal combustion engine of Figure 1 with the valve train assembly in a second configuration;
Figure 5 is a schematic illustration of a firing sequence of three engine cylinders of an internal combustion engine;
Figure 6 is a schematic perspective sectional view the internal combustion engine of Figure 1;
Figure 7 illustrates a retention pin;
Figure 8 is a schematic side sectional view of a camshaft;
Figure 9 is a perspective view of an actuator rod;
Figure 10 is a side sectional view of the actuator rod of Figure 9;
Figure 11 is a schematic side sectional view of a valve train assembly in a first configuration;
Figure 12 is a schematic side sectional view of the valve train assembly in a second configuration;
Figure 13 is a schematic perspective view of part of a valve train assembly;
Figure 14 is a schematic perspective view of part of an engine;
Figure 15 is a schematic perspective view of the part of the valve train assembly of Figure 13;
Figure 16 is a schematic perspective view of a shifting rod;
Figure 17 is a schematic perspective view of part of a another valve train assembly;
Figure 18 is a schematic side view of the part of a valve train assembly of Figure 17; and
Figure 19 is a schematic perspective view of a component of the valve train assembly of Figure 17 and 18.

### Detailed Description of Illustrated Embodiments of the Invention

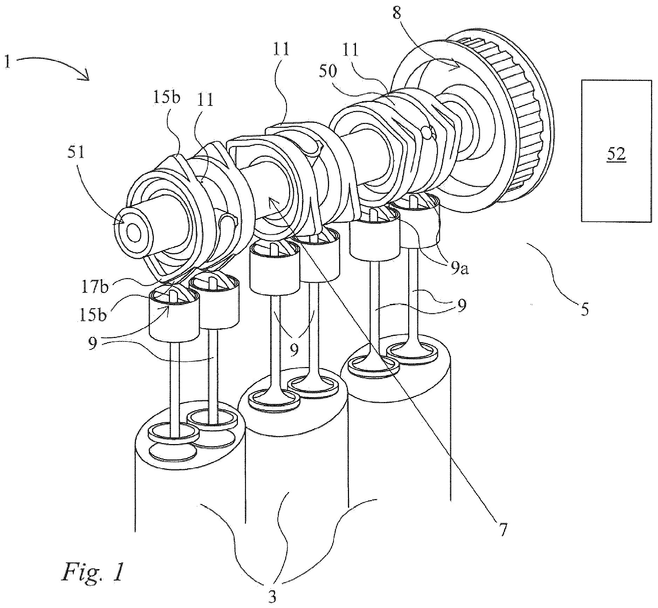

Figure 1 is a schematic illustration of part of an internal combustion engine 1. In this example the engine 1 is a three cylinder engine comprising three cylinders 3. A valve train assembly 5 of the Overhead Camshaft (OHC) type comprises a camshaft 7 for operating three pairs of valves 9 wherein each of the pairs of valves 9 is for a respective one of the three cylinders 3. The valves 9 are either all intake valves or all exhaust valves. Each valve comprises a return spring (not shown) biased to return that valve to a closed positions after it has been opened. It will be appreciated that whatever type of valves the valves 9 are (i.e. intake or exhaust), the engine 1 will comprise a second camshaft (not shown), similar to the camshaft 7, for operating three corresponding pairs of the other type valves (not shown), one pair of valves for each cylinder 3. Accordingly, each cylinder 3 comprises a pair of intake valves and a pair of exhaust valves. The camshaft 7 comprises a camshaft pulley 8 at one end connected by gearing (not shown) to an engine crankshaft (not shown) so that in use crankshaft rotation causes rotation of the camshaft 7.

The camshaft 7 comprises three cam assemblies 11 mutually spaced apart along a longitudinal axis of the camshaft 7. Each cam assembly 11 is for controlling a respective one of the three pairs of valves 9. To this end, each valve comprises at its upper end a lifting pad 9a arranged to be in sliding engagement with a cam assembly 11 as the camshaft 7 rotates. As will explained in greater detail below each cam assembly 11 is rotationally locked with respect to the camshaft 7 (i.e. when the camshaft 7 and hence each cam assembly 11 rotate, there is no relative rotation between the camshaft 7 and each cam assembly 11) but the cam assemblies 11 are shift-able, along the longitudinal axis of the camshaft 7 between a first position that provides for a normal engine combustion mode and a second position that provides for a cyclical cylinder deactivation mode.

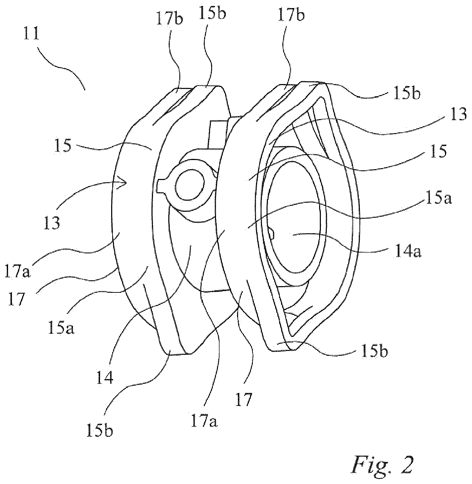

Referring now to Figure 2 in particular, each cam assembly 11 defines first and second cam sections 13, one at each respective end of the cam assembly 11, separated by a central section 14. Each cam assembly 11 defines a central bore 14a extending along its longitudinal axis and through which, when the valve train assembly 3 is assembled, the cam shaft 7 extends.

Each cam section 13 further defines first 15 and second 17 cams arranged side-by-side along the axis of cam assembly 11. Each first cam 15 comprises a base circle 15a and a pair of lift lobes 15b. In this example, the lift lobes 15b are identical and have an angular separation of 180 degrees. Each second cam 17 defines a base circle 17a and a single lift lobe 17b. The lift lobe 17b may have a different profile to the lift lobes 15b.

When the cam assemblies 11 are in the first position that provides for normal engine combustion mode each first cam 15 is positioned so that it is in sliding contact with its respective one of the lifting pads 9a of a valve 9 and each second cam 17 is positioned so that it is not in contact that respective one of the lifting pads 9a. In contrast, when the cam assemblies 11 are in the second position that provides for cylinder deactivation mode, it is each second cam 17, rather than each first cam 15, that is positioned so that it is in sliding contact with its respective one of the lifting pads 9a of a valve 9.

It will be appreciated that in standard internal combustion engines comprising camshaft systems, a complete four stroke engine cycle of a cylinder comprises two complete rotations (i.e. 720 degrees) of the engine's crankshaft and one rotation (i.e. 360 degrees) of the camshaft (and thus the crankshaft is connected to drive a camshaft at half its own rate of rotation). Typically, each cam comprises a single main lift lobe so that the engine valve controlled by that cam is actuated once per engine cycle.

In contrast, in this example, the engine crankshaft (not shown) is connected to the cam pulley 8 by gearing (not shown), for example a planetary gear system, so as to drive the camshaft 7 at one quarter of the crankshaft's own rate of rotation so that a complete four stroke engine cylinder cycle comprises two complete rotations of the engine's crankshaft (as per normal) but only one half of a rotation (i.e. 180 degrees) of the camshaft 7.

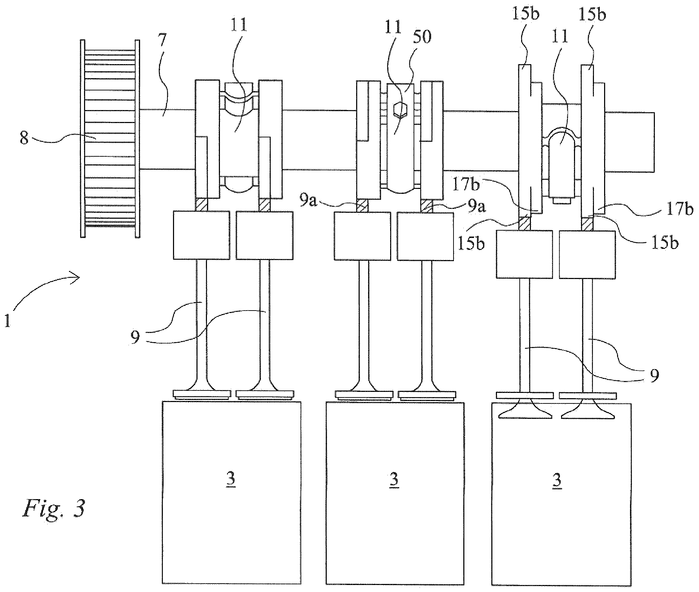

Accordingly, when the cam assemblies 11 are in the first position that provides for a normal engine combustion mode (FIGURE 3), even though the camshaft 7 is rotating at half the normal rate of a camshaft, each valve 9 is still operated once per engine cycle by virtue of each first cam 15 having two first lift lobes 15b at 180 degrees separation. However, for a given first cam 15 of a cam assembly 11, the particular one of the two first lift lobes 15b that activates a valve 9 in a given engine cycle of a cylinder 3 alternates from cycle to cycle.

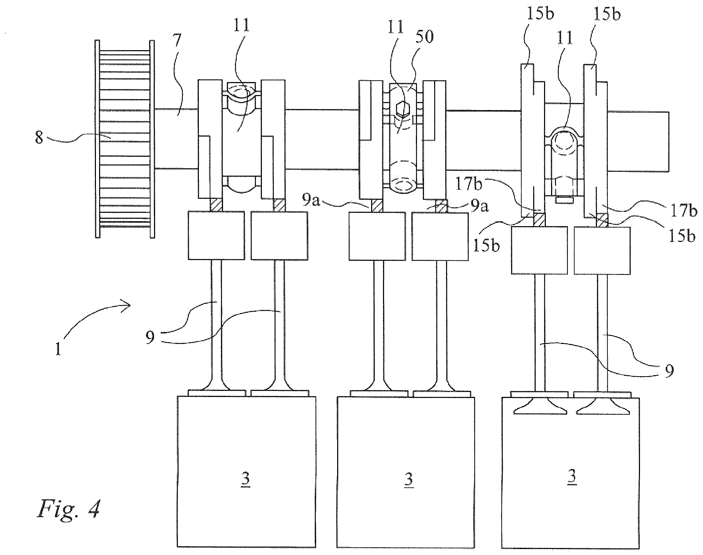

When the cam assemblies 11 are in the second position (FIGURE 4), the two second cams 17 of the cam assembly 11 of a given cylinder 3 activate the two valves 9 of that cylinder only once every other cylinder engine cycle because the camshaft 7 is rotating at a ¼ the rate of the crankshaft and each second cam 17 comprises only a single lobe 17b, but do not activate the valves 9 in each cycle that falls between successive active cycles. During those engine cycles in which the cylinder 3 is de-activated, the base circles 17a of the second cams 17 remain in sliding contact with their respective valves 9 for the whole of the engine cycle and hence the valves 9 remain closed.

It will be appreciated that preferably, if each single lobe 17b is shaped differently from each lobe 15b and/or angularly offset from the lobe 17b that it is closest to, the valve lift for each cylinder that is provided in the deactivation mode will be different (in height and/or timing) from the valve lift for each cylinder that is provided in the normal combustion mode and can be made more suitable for the lower engine speeds and loads associated with the deactivation mode.

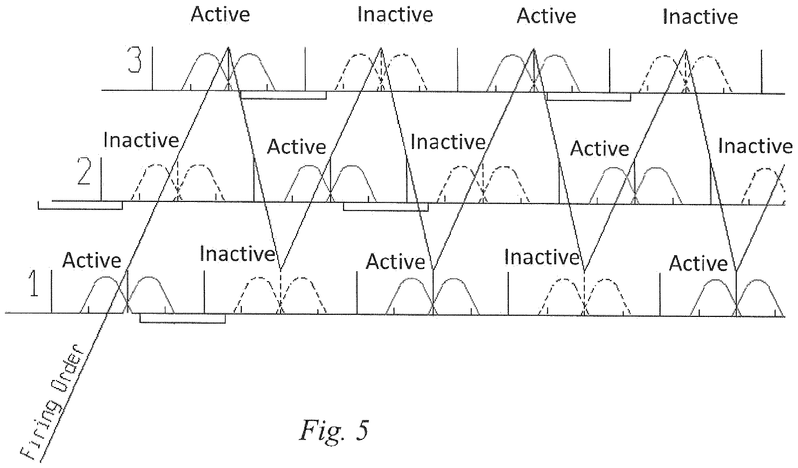

In this example, the cylinders 3 have a known so called 1-2-3 firing order (i.e. a sequence of power delivery of the cylinders). Accordingly, the lift lobes of each cam arrangement 11 are angularly offset with respect to the corresponding lift lobes of the other two cam arrangements 11 so that the timing of the various valve events is appropriate for the cylinder firing order. Figure 5 illustrates schematically a firing sequence for the three cylinders (individually labelled 1, 2 and 3 in Figure 5) and further indicates for each of the three cylinders which of its engine cycles is active and which is in-active when the valve train assembly 5 is the second configuration. Each active cycle is indicated by two full line curves (one representing the valve lift of an intake valve, the other the valve lift of an exhaust valve) and each in-active cycle is indicated by two broken line curves. Looked at individually, it can be seen that, as described above, for a given cylinder, every other engine cycle is active with successive active cycles being separated by an inactive cycle. For cylinders 1 and 3 (as labelled in the Figure) odd numbered cycles are active and even numbered cycles are inactive and vice versa for the cylinder labelled 2. As the cylinders are fired in the repeating sequence 1 - 2 - 3, the net overall repeating sequence for the three cylinders in combination is 1(active) - 2(inactive) - 3(active) - 1(inactive) - 2(active) -3(inactive) with the result that engine torque remains well balanced because every active cycle in the firing sequence is followed by an inactive cycle and vice versa. Moreover, in contrast with cam-less cylinder deactivation systems, this result is achieved in a straightforward manner simply by placing the valve train assembly into the second configuration. There is no requirement for a solenoid (or other such control system) for each valve (or pair of valves) for repeatedly activating and deactivating the valve(s) from cycle to cycle.

It will be appreciated that within two cam revolutions each cylinder is activated once and deactivated once and in effect the 3 cylinder engine is running in a 1.5 cylinder mode.

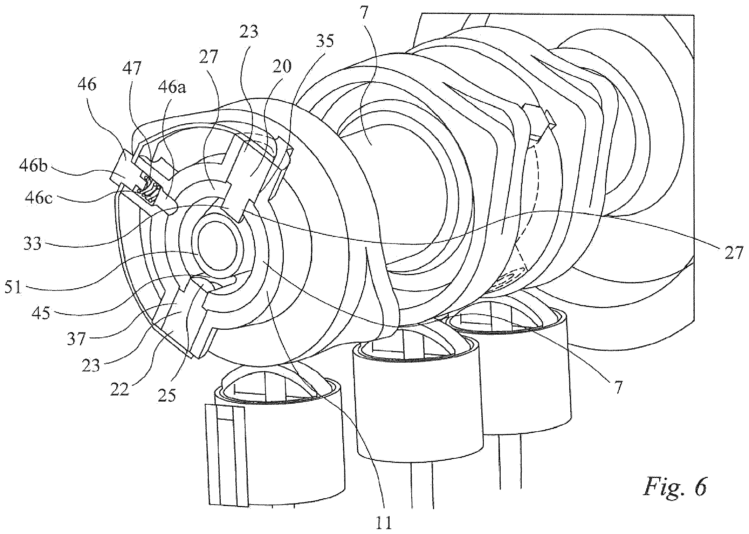

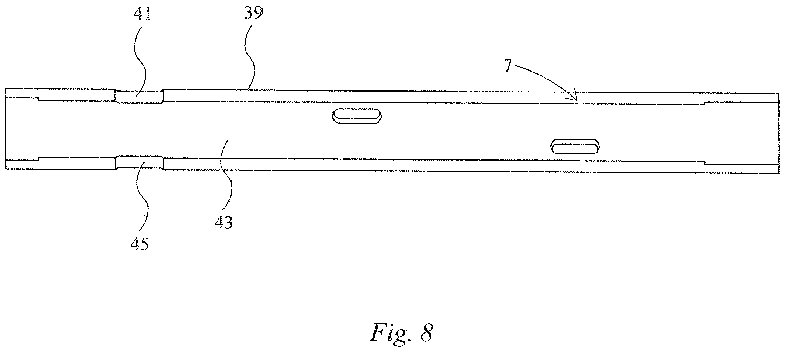

Referring now primarily to Figures 6 to 12 there is described an example actuation system for axially shifting the cam assemblies 11 so as to configure the valve train assembly 5 between the first configuration and the second configuration.

In this example, each cam assembly 11 comprises first 20 and second 22 retention pins which prevent relative rotation between that cam assembly 11 and the camshaft 7 but allow that cam assembly 11 to move axially along the camshaft 11 between the first and second positions.

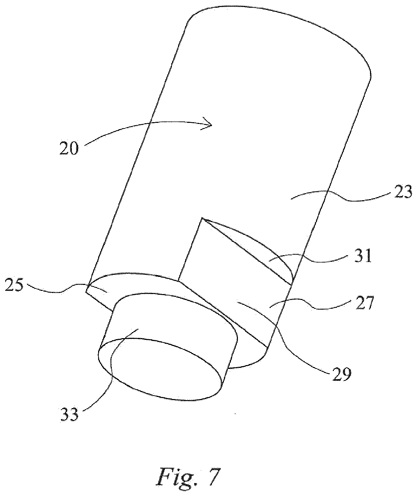

As seen in Figure 7, the first retention pin 20 comprises a first cylindrical portion 23 defining towards a first end surface 25 a pair of cut out shoulder sections 27 (only one is visible in the view of Figure 7). Each cut out section 27 comprises a first planar contact surface 29 and a second planar contact surface 31. The first planar contact surface 29 is perpendicular to and intersects the first end surface 25 and the second planar contact surface 31 is parallel to the first end surface 25 and intersects the first planar contact surface 29. The first retention pin 20 further comprises a second cylindrical portion 33 which is coaxial with the first cylindrical portion 23 and extends from the first end surface 25. The second cylindrical portion 33 has a smaller diameter and a smaller length than the first cylindrical portion 23.

The second retention pin 22 is similar to the first retention pin 20 but does not comprise a second cylindrical portion 33.

In each cam assembly 11, the first retention pin 20 is received within a first aperture 35 defined by the cam assembly 11 and the second retention pin 22 is received within a second aperture 37 also defined by the cam assembly 11. The first retention pin 20 fits tightly in the first aperture 35 with the second planar contact surfaces 31 resting on an outer surface 39 of the camshaft 7 and the first planar contact surfaces 27 in contact with the side walls of a first guide slot 41 defined in the cam shaft 7. The end surface 25 of the first retention pin 20 is flush with the inner surface 43 of the camshaft 7 and the second cylindrical portion 33 extends into the hollow interior of the camshaft 7.

Similarly, the second retention pin 22 fits tightly in the second aperture 37 with the second planar contact surfaces 31 resting on the outer surface 39 of the camshaft 7 and the first planar contact surfaces 27 in contact with the side walls of a second guide slot 45 defined in the cam shaft 7. The end surface 25 of the second retention pin 22 is flush with the inner surface 43 of the camshaft 7 but, as there is no second cylindrical portion 33, no part extends into the hollow interior of the camshaft 7.

Thus, the rotational position of a cam assembly 11 relative to the camshaft 7 is fixed (to be non-rotatable) while a degree of axial sliding movement of the cam assembly 11 relative to the camshaft 7 is permitted.

Each cam assembly 11 further comprises an axial position positioning pin 46 received within a third aperture 47 defined by the cam assembly 11. Each positioning pin 46 comprises a tip portion 46a, a head portion 46b and a biasing member 46c disposed between the two. For each cam assembly 11, the camshaft 7 is provided with first 48 and second 49 formations on its outer surface 39 which respectfully precisely define the first and second axial positions of the cam assembly 11. The tip portion 46a of each positioning pin 46 is complimentary in shape to the first 48 and second 49 formations so that when a cam assembly 11 is in the first position its positioning pin 46 engages the first formation 47 and when the cam assembly 11 is in the second position its positioning pin 46 engages the second formation 49. The biasing member 46c of each positioning pin 46 is arranged to bias its tip 46c towards the outer surface 39 of the camshaft 7 so that the positioning pin 46 functions to retain its cam assembly 11 in its axial position when in either the first position or the second position. In this way, a positioning pin 46 inhibits a cam assembly 11 from being accidently moved out of the first or second positions.

In this example, for a given cam assembly 11, the first retention pin 20, the second retention pin 22 and the positioning pin 46 are held in position in that cam assembly 11 by means of a clip 50 that is attached around the central section 14 of the cam assembly.

It will be appreciated that for a given cam assembly 11, the first guide slot 41, the second guide slot 45, the first formation 48 and the second formation 49 formed in the cam shaft 7 for that assembly 11 are angularly offset around the circumference of the cam shaft 11 with respect to those corresponding slots and formation for the other cam assemblies 11. This enables the cam assemblies 11 to be fitted to the cam shaft 11 with the required angular offset of the corresponding lift lobes of the cam arrangements 11 required to provide the various valve events appropriate for the cylinder firing order.

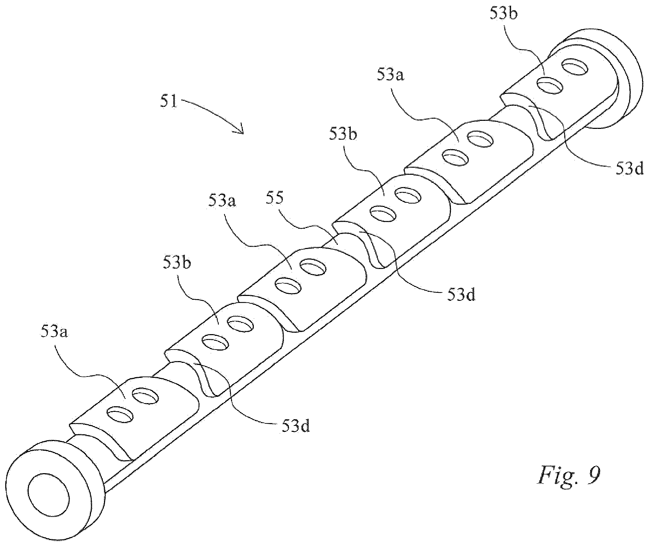

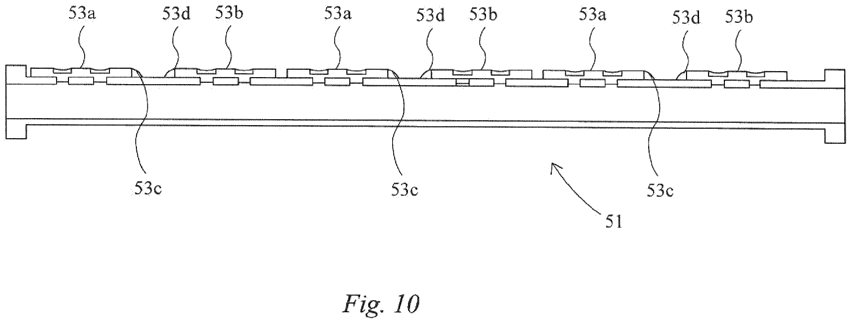

An actuation rod 51 which is co-axial with and fitted inside the camshaft 7 is provided for moving the cam assemblies 11 between the first and second positions and to this end is driven by an actuator 52 (See Figure 1). As best illustrated in Figures 9 and 10, the actuation rod 51 comprises three pairs of raised portions 53a, 53b spaced apart axially on its outer surface 55, each pair comprising a first raised portion 53a and a second raised portion 53b. Each first raised portion 53a and second raised portion 53b of a pair comprises respective first 53c and second 53d push surfaces. The pairs of raised portions 53a and 53b are positioned along the actuation rod 51 so that each corresponding pair of first 53c and second 53d push surfaces define a region through which the second cylindrical portion 33 of a first retention pin 20 of a cam assembly 11 is free to move through as the cam shaft 11 rotates (the actuation rod 51 itself does not rotate). The first 53c and second 53d contact surfaces each tapers in height along its length and for a given pair of opposing first 53c and second 53d contact surfaces, the first 53c and second 53d contact surfaces are angled across the surface of the actuation rod 51 in opposite senses so that at one end the first 53c and second 53d contact surfaces are closer together than they are at the other end. It will be appreciated that as the cam shaft 11 rotates, each portion 33 enters the region at the end were the first 53c and second 53d contact surfaces are furthest apart and leaves the region at the end where the first 53c and second 53d contact surfaces are closest together.

As illustrated, each first raised portion 53a and each second raised portion 53b may be non-integral with the actuation rod 51 and may be fixed to the actuation rod 51 by some suitable means (e.g. snap-fitted). Alternatively, each first raised portion 53a and each second raised portion 53b may be formed integrally the actuation rod 51.

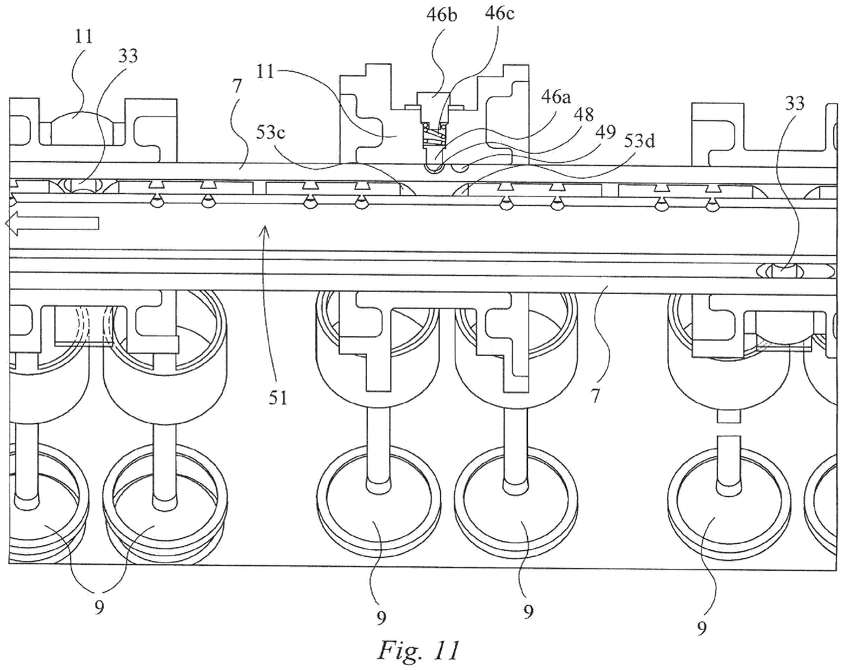

As illustrated in Figure 11, when in the first non-deactivating position, the positioning pin 46 of each cam assembly 11 engages a first formation 48 to help retain that cam assembly 11 in position as the cam shaft 7 (and cam assemblies 11) rotates about it axis. In order to shift the cam assemblies 11 from the first position to the second position, the actuator 52 shifts the actuation rod 51 axially (to the right as viewed in the plane of Figure 11) by a fixed amount which brings each first 53c surface into contact with a second cylindrical portion 33 of a first retention pin 20 so that the actuation rod 51 exerts a pushing force on the cam assemblies 11 causing the positioning pins 46 to disengage from the first formations 48 and the cam assemblies 11 to slide axially across the cam shaft 7 until the cam assemblies 11 are in the second position and under the action of the biasing members 45c the positioning pins 45 have engaged the second formations 49.

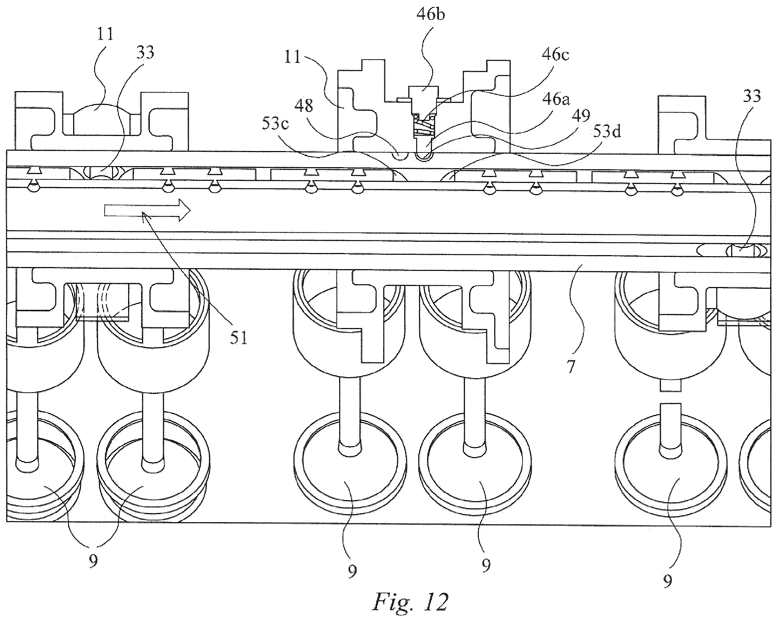

Similarly, in order to shift the cam assemblies 11 from the second position to the first position, the actuator shifts the actuation rod 51 axially in the reverse direction (to the left as viewed in the plane of Figure 12) by the fixed amount which brings each second 53d surface into contact with a second cylindrical portion 33 of a first retention pin 20 so that the actuation rod exerts a pushing force on the cam assemblies 11 causing the positioning pins 46 to disengage from the second formations 49 and the cam assemblies 11 to slide axially across the cam shaft until the cam assemblies 11 are in the first position and under the action of the biasing members the positioning pins 46 have engaged the first formations 48.

Accordingly, the actuation system provides a simple and reliable system for configuring the valve train assembly in the first and second configurations.

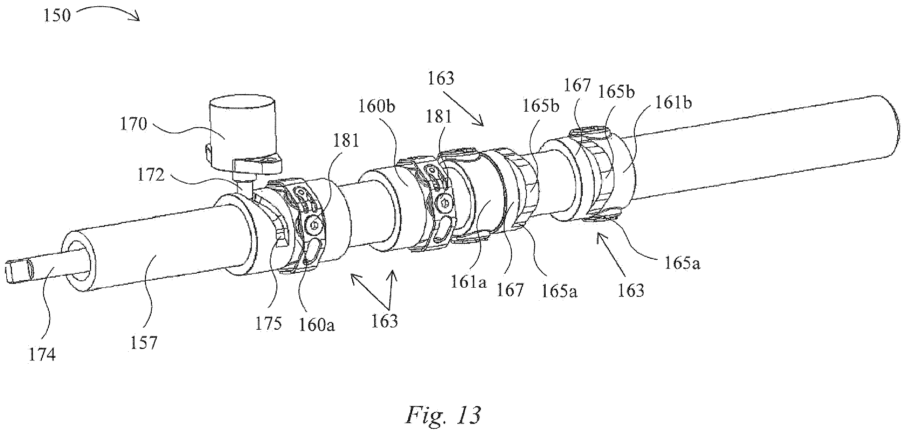

Referring now first to Figure 13 there is a schematic illustration of a part of another valve train assembly 150 of the Overhead Camshaft (OHC) type comprising a camshaft 157 (of which only a central section is illustrated) for operating gas exchange valves (not shown) of the cylinders (not shown) of an internal combustion engine 158. The valves (not shown) operated by the camshaft 157 are either all intake valves or all exhaust valves and, accordingly, whichever the type of valves controlled by the camshaft 157 (i.e. intake or exhaust), the engine comprises a second valve train assembly 151, similar to the valve train assembly 150 for operating the other type of valves (not shown).

In this example, the engine 158 is a four cylinder engine and there are a pair of intake valves (not shown) and a pair of exhaust valves (not shown) per cylinder (not shown) and the illustrated section of the cam shaft 157 is for operating one of the valve types (i.e. intake valves or exhaust valves) of the second and third cylinders (not shown) of the engine 158. To that end, the camshaft 157 comprises four separate first 160a, second 160b, third 161a and fourth 161b cam assemblies mutually spaced apart along a longitudinal axis of the camshaft 157 with the first cam assembly 160a and the second cam assembly 160b for operating first and second valves (not shown) respectively of the second cylinder (not shown) and the third cam assembly 161a and the fourth cam assembly 161b for operating first and second valves (not shown) respectively of the third cylinder (not shown). In this example, the engine 158 is of the type where supports 152 are provided that support the camshaft between the cam assemblies of each given cylinder (e.g. a support 152 is located between the cam assembly 160a and the cam assembly 160b of the second cylinder and another support 152 is located between the cam assembly 161a and the cam assembly 161b of the third cylinder). The cam shaft comprises a camshaft pulley (not shown) at one end connected by gearing (not shown) to an engine crankshaft (not shown) so that in use crankshaft rotation causes rotation of the camshaft 157 but in this example the gearing is such that the camshaft 157 rotates at the standard half the rate of rotation of the crankshaft.

Again, as with the example described above with respect to Figures 1 to 12, each cam assembly 160a, 160b, 161a and 161b is rotationally locked with respect to the camshaft 157 but the cam assemblies 160a, 160b, 161a and 161b are shift-able along the longitudinal axis of the camshaft 157 between a first position that provides for a normal engine combustion mode and a second position that provides for a cylinder deactivation mode. In this example, the cylinder deactivation mode is a standard cylinder deactivation mode for a four cylinder engine in that the second and third cylinders (not shown) remain deactivated in every engine cycle because a cam follower (not shown) of each valve (not shown) is always on a base circle of a cam assembly 160a, 160b, 161a and 161b while the first and fourth cylinders (not shown) remain active in every engine cycle with the valves (not shown) of those cylinders (not shown) being controlled by respective other cam assemblies (not shown) for those valves (not shown).

Referring again to Figure 13 in particular, each cam assembly 160a, 160b, 161a and 161b defines a respective cam section 163 at one of its ends and each cam section 163 further defines first 165 and second 167 cams arranged side-by-side along the axis of the respective cam assembly 160a, 160b, 161a and 161b. Each first cam 165 comprises a base circle 165a and a lift lobe 165b. In contrast, each second cam 167 defines a base circle 167 only (i.e. it does not define a lift lobe).

Accordingly, when the cam assemblies 160a, 160b, 161a and 161b are in the first position that provides for normal engine combustion mode each first cam 165 is positioned so that it is in sliding contact with a cam follower (not shown) of a valve (not shown) so that that cam's lift lobe 165b activates the valve ever cylinder cycle. However, when the cam assemblies 160a, 160b, 161a and 161b are in the second position that provides for cylinder deactivation mode, it is each second cam 167, rather than each first cam 165, that is positioned so that it is in sliding contact with a cam follower (not shown) of a valve (not shown) and because each second cam 167 comprises a base circle only, each valve remains inactive in each cylinder cycle.

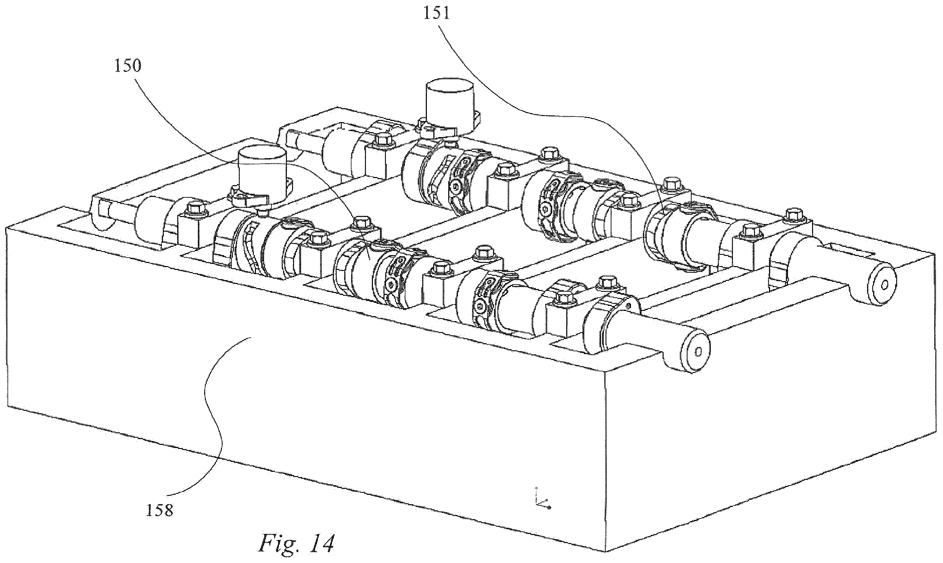

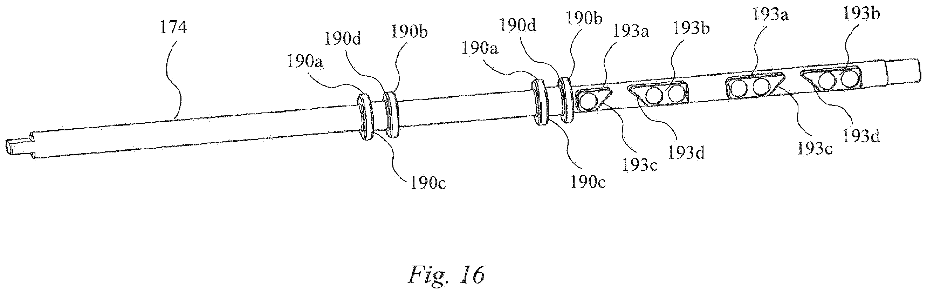

Referring now to all of Figures 13 to 16, an actuation system for axially shifting the cam assemblies 160a, 160b, 161a and 161b between the first and second positions comprises an electro-magnetic actuator 170 comprising an actuation pin 172, and an actuation or shifting rod 174 which is co-axial with and fitted inside the camshaft 157. The actuation pin 172 is for selectively engaging either one of a pair of spiral grooves 175 (only one is illustrated in the Figure) formed in the first cam assembly 160a, to shift the first cam assembly 160a between its first and second positions. In order to shift the first cam assembly 160a from the first position to the second position the actuation pin 172 engages a first one of the pair of spiral grooves 175 and to shift the first cam assembly 160a from the second position to the first position the actuation pin 172 engages the second one of the pair of spiral grooves 175. The use of such a pin 172 and grooves 175 for axially shifting a cam assembly on a cam shaft is known in the art and so this particular aspect of the actuation system will not be described in any further detail. However, advantageously in this example, the cam assemblies 160a, 160b, 161a and 161b and the shifting rod 174 are arranged so that when the first cam assembly 160a is axially shifted from its first position to its second position (or vice versa) by the actuator 170, the first cam assembly 160a causes the shifting rod 174 to be axially shifted in the same direction as the first cam assembly 160a so that in turn the shifting rod 174 causes each of the cam assemblies 160b, 161a and 161b to be axially shifted from its first position to its second position (or vice versa).

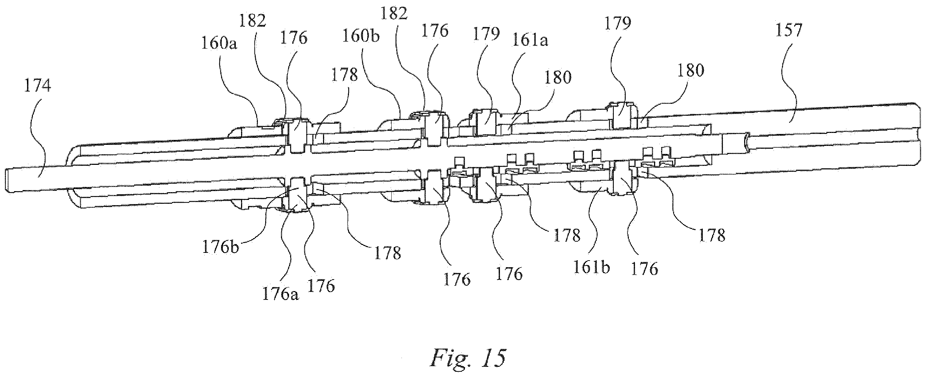

In this example as best seen in Figure 15, the cam assembly 160a and the cam assembly 160b both comprise a pair of retention pins 176 and the cam assembly 161a and the cam assembly 161b both comprise a retention pin 176 which retention pins 176 are all similar in design to the first retention pins 20 described above. Each retention pin 176 is received within its own aperture defined by its cam assembly 160a, 160b, 161a and 161b and extends into its own respective guide slot 178 formed through the cam shaft 157. Each retention pin 176 comprises a cylindrical main portion 176a and a smaller diameter cylindrical end portion 176b which end portion 176b extends into the hollow interior of the cam shaft 157. The cam assembly 161a and the cam assembly 161b both further comprise a retention pin 179 also received within its own aperture defined by the respective cam assembly 161a, 161b. Each retention pin 179 is shorter than the retention pins 176 and comprises a cylindrical portion that extends into its own respective guide slot 180 formed through the cam shaft 157 but does not comprise any portion that extends into the hollow interior of the cam shaft 157.

Each cam assembly 160a, 160b, 161a and 161b further comprises an axial positioning pin 181, similar to the axial positioning pin 46 described above, received within its own aperture defined by the respective cam assembly 160a, 160b, 161a and 161b. Again, each positioning pin 181 engages a first formation (not shown) in the cam shaft 157 when its cam assembly 160a, 160b, 161a and 161b is in the first position and engages a second formation (not shown) in the cam shaft 157 when its cam assembly 160a, 160b, 161a and 161b is in the second position.

For a given cam assembly 160a, 160b, the pair of retention pins 176, and the positioning pin 181 and, for a given cam assembly 161a and 161b the retention pin 176, the retention pin 179 and the positioning pin 180, are held in position in their respective cam assembly 160a, 160b, 161a and 161b by means of a respective clip 182 that is attached around that cam assembly 160a, 160b,161a and 161b.

The shifting rod 174 comprises two pairs of opposing circumferential ridges 190a and 190b. Each pair of circumferential ridges 190a and 190b is associated with a respective one of the cam assemblies 160a and 160b and the ridges 190a and 190b of a pair have respective contact surfaces 190c and 190d that define a space into which the end portions 176b of the retention pins 176 of that pair's cam assembly extend and are free to move through as the cam shaft 157 rotates.

The shifting rod 174 further comprises two pairs of raised portions 193a, 193b, which are similar to the pairs of raised portions 53a and 53b described above. Each pair of raised portions 193a and 193b is associated with a respective one of the cam assemblies 161a and 161b and comprises a first raised portion 193a and a second raised portion 193b and each first raised portion 193a and second raised portion 193b of a pair comprises respective first 193c and second 193d push surfaces. Each pair of first 193c and second 193d push surfaces define a space through which the end portion 176b of the retention pin 176 of that pair's cam assembly 161a and 161b is able to move as the cam shaft 158 rotates.

In order to shift the cam assemblies 160a, 160b, 161a and 161b from the first position to the second position (or vice versa), the electromagnetic actuator 170, under the control of an engine control system (not shown), causes the actuation pin 172 to engage the spiral groove 175 to drive the cam assembly 160a from the first position to the second position (or vice versa). Immediately the cam assembly 160a begins to move, its retention pins' 176 end portions 176b contact, depending upon the axial direction of the cam assembly's 160a movement, either the contact surface 190c or the contact surface 190d of the pair of circumferential ridges 190a and 190b associated with cam assembly 160 causing the shifting rod 174 move in the same axial direction as the cam assembly 160a. The movement of the shifting rod 174 brings, depending upon the direction of movement, either the contact surface 190c or the contact surface 190d of the pair of circumferential ridges 190a and 190b associated with the cam assembly 160b into contact with the end portions 176b of that cam assembly's 160 retention pins 176 to drive the cam assembly 160b from the first position to the second position (or vice versa).

Additionally, the movement of the shifting rod 174 brings, depending upon the direction of movement, either the contact surface 193c or the contact surface 193d of each pair of raised portions 193a, 194b into contact with the end portion 176b of the retention pin 176 of the cam assembly 161a, 161b associated with that pair of raised portions 193a, 194b to drive the cam assemblies 161a and 161b from the first position to the second position (or vice versa). The arrangement is such that first cam assembly 160a and the second cam assembly 160b (i.e. the cam assemblies for cylinder 2) move immediately with the shifting rod 174 whereas the cam assemblies 161a and 161b (i.e. the cam assemblies for cylinder 3) move later (i.e. the time taken for 180 degrees rotation of the cam shaft) as a result of the raised portions 193a and 194b. It will be appreciated that the shifting rod 174 may have moved but be stationary again before the cam assemblies 161a and 161b are caused to be moved.

It will be appreciated that the retention pins 176 participate in transmitting torque from the cam shaft to the cam assemblies and in the axial shifting of the cam assemblies whereas the retention pins participate only in transmitting torque from the cam shaft to the cam assemblies.

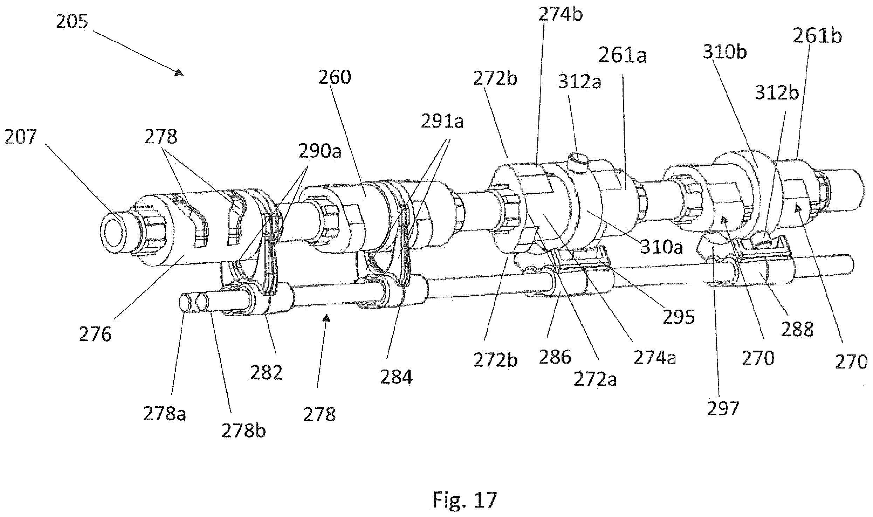

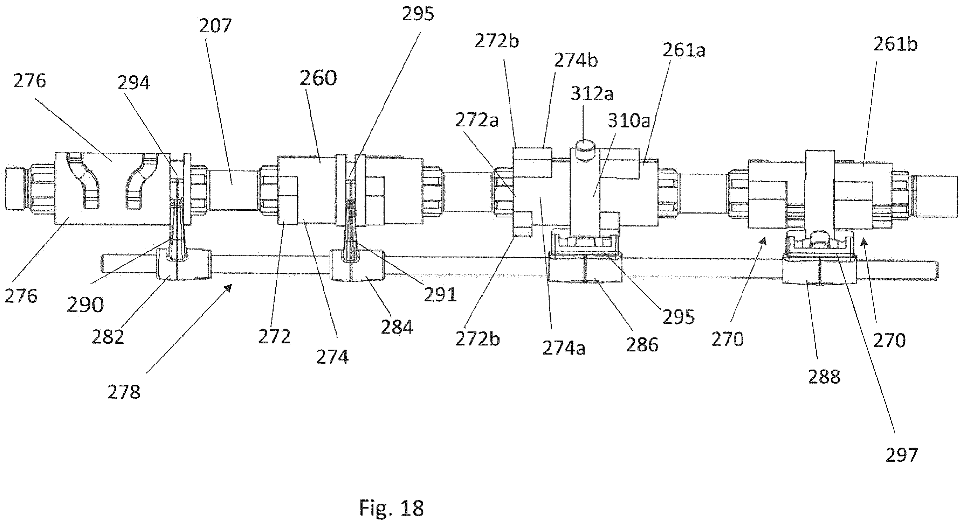

Referring now to Figures 17 to 19, there is illustrated a valve train assembly 205, that is outside of the scope of the appended claims, comprising a camshaft 207 for operating three pairs of valves (not shown) each pair of valves for a respective one of three engine cylinders not shown. Similar to the embodiment described above with respect to Figures 1 to 12, in this embodiment the valve train assembly 205 is configurable in a first configuration that provides for a normal engine combustion mode and a second configuration that provides for a cyclical cylinder deactivation mode.

To that end, the camshaft 207 comprises a first cam assembly 260, a second cam assembly 261a and a third cam assembly 261b each for operating a respective one of the three pairs of valves (not shown). Again, each of the cam assemblies 260, 261a and 261b is rotationally locked with respect to the camshaft 207 but is shift-able along the longitudinal axis of the camshaft 207 between a first position for the normal engine combustion mode and a second position for the cyclical cylinder deactivation mode.

Furthermore, each of the cam assemblies 260, 261a and 261b defines first and second cam sections 270 (for clarity labelled only on the third cam assembly 261b) for respectively controlling a first valve (not shown) and a second valve (not shown) of a respective one of the pairs of valves (not shown). Similar to the arrangement in the first example, each cam section 270 defines first 272 and second 274 cams (for clarity labelled only on the left hand side of the first cam assembly 260), each first cam 272 defining a base circle 272a and a pair of lift lobes 272b having an angular separation of 180 degrees and each second cam 274 defining a base circle 274a and a single lift lobe 274b (for clarity labelled only on the left hand side of the second cam assembly 261a).

Again similar to the first described example, the engine crank shaft (not shown) is connected by a gearing system (not shown) to drive the camshaft 207 at ¼ the rate of rotation of the crankshaft (not shown). Accordingly, when the cam assemblies 260, 261a and 261b are in the first position, each valve (not shown) is operated once per engine cycle in response to a pair of lift lobes 272b and when the cam assemblies 260, 261a and 261b are in the second position, each valve (not shown) is operated once every engine cycle in response to a single lift lobe 274b.

An actuation system for axially shifting the cam assemblies 260, 261a and 261b comprises an electro-magnetic actuator (not shown) comprising an actuation pin (not shown), a shifting barrel 276 and a shifting rod arrangement 278.

The shifting barrel 276, like the cam assemblies 260, 261a and 261b, is mounted on the cam shaft 257 so as to be rotationally fixed with respect there to, but is axially moveable along the cam shaft between first and second positions corresponding to the normal engine combustion mode and the cyclical cylinder deactivation mode. The shifting barrel 276 comprises a pair of grooves 278 and the electro-magnetic actuator (not shown) causes an actuation pin (not shown) to engage one of the pair of grooves 280 to move the shifting barrel 276 from its first position to its second position and to engage the other one of the pair of grooves 280 to move the shifting barrel 276 from its second position its first position.

In this example, the shifting rod arrangement 278 is arranged and supported parallel to the cam shaft 257, but unlike the shifting rods described in the above examples it is external to the cam shaft 257.

In some respects similar to the example described above with respect to Figures 13 to 16, in this example, the shifting rod arrangement 278, the shifting barrel 276 and the cam assemblies 260, 261a and 261b are arranged so that when the actuator (not shown) moves the shifting barrel 276 from its first position to its second position (or vice versa), the shifting barrel 276 causes the shifting rod arrangement 278 to be axially shifted in the same direction as the shifting barrel 276 so that the shifting rod arrangement 278 causes each of the first cam assembly 260, the second cam assembly 261a and the second cam assembly 261b to be shifted from its first position to its second position (or vice versa).

The shifting rod arrangement 278 comprises first 278a and second 278b parallel sub rods which are supported by first 282, second 284, third 286 and fourth 288 support members axially spaced apart along the longitudinal axis of shifting rod arrangement 278.

The first support member 282 comprises a generally 'U' shaped member 290 having a pair of arms 290a extending transversely from the shifting rod arrangement 278 towards the cam shaft 257 and the second support member 284 comprises a similar 'U' shaped member 291 also having a pair of arms
291a extending transversely from the shifting rod arrangement 278 towards the cam shaft 257.

At one end, the shifting barrel 276 defines a first circumferential groove 294 into which extend end portions of the pair of arms 290a of the first support member 282. At roughly its midpoint, the first cam assembly 260 defines a second circumferential groove 295 into which extend end portions of the pair of arms 291a of the second support member 284.

The third support member 286 supports a first contact platform 295 and the fourth support member 288 supports a similar second contact platform 297.

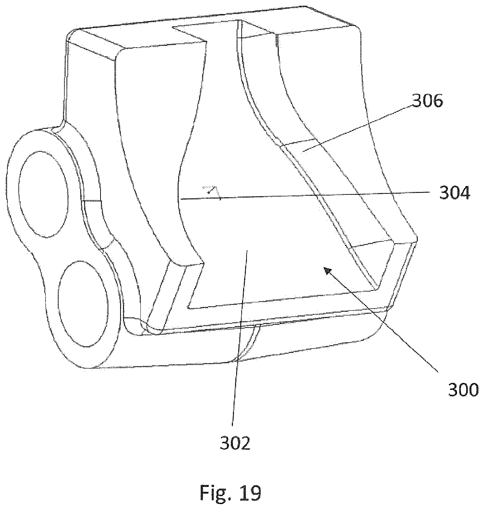

As illustrated in Figure 19, each of the first 295 and second 297 contact platforms comprises a face 300 defining a recessed portion 302 comprising a first side contact surface 304 and an opposing second side contact surface 306. The first side contact surface 304 and the second side contact surface 306 each tapers in height in both directions along its length (i.e. it is higher along it middle portion than at its ends) are curved and are divergent so that they are closer to each other at one end than they are at the other end.

At roughly its midpoint, the second cam assembly 261a defines a circumferential collar 310a from which extends a first cylindrical contact member 312a. Likewise, at roughly its midpoint, the third cam assembly 261b defines a circumferential collar 310b from which extends a second cylindrical contact member 312b.

When in the first configuration or the second configuration, as the cam shaft 257 rotates (and hence as the shifting barrel 276, and the cam assemblies 260, 261a and 261b rotate) the shifting barrel 276 rotates without contacting the pair of arms 290a, the first cam assembly 260 rotates without contacting the pair of arms 291, the second cam assembly 261a rotates with the first cylindrical contact member 312 passing freely through the recessed portion 302 of the first contact platform 295 and the third cam assembly 261b rotates with the second cylindrical contact member 312b passing freely through the recessed portion 302 of the second contact platform 297.

In order to shift the cam assemblies 260, 261a and 261b from the first position to the second position (or vice versa), the electromagnetic actuator (not shown) under the control of an engine control system (not shown), causes an actuation pin (not shown) to engage one or other (depending on the required direction) of the grooves 280 to drive the shifting barrel 276 from its first position to its second position (or vice versa).

Immediately the shifting barrel 276 begins to move, one or other (depending upon the direction of motion) of a pair of side walls of the first circumferential groove 294 contacts the end portions of the pair of arms 290a causing the shifting rod arrangement 278 to move in the same axial direction as the shifting barrel 276.

The movement of the shifting rod arrangement 278 brings the end portions of the pair of arms 291a into contact with (depending upon the direction of movement) one or other of the pair of side walls of the second circumferential groove 295 causing the first cam assembly 260 to move in the same axial direction as the shifting barrel 276 so that the first cam assembly 260 moves between its first and second positions (or vice versa).

Additionally, the movement of the shifting rod arrangement 278 brings, (depending upon the direction of movement) either the first contact surface 304 or the second contact surface 306 of the first contact platform 295 into contact with the first cylindrical contact member 312a causing the second cam assembly 261 to move in the same direction as the shifting barrel 276 so that the third cam assembly 261a moves between its first and second positions (or vice versa).

Similarly, the movement of the shifting rod arrangement 278 brings, (depending upon the direction of movement) either the first contact surface 304 or the second contact surface 306 of the second contact platform 297 into contact with the second cylindrical contact member 312b causing the third cam assembly 261b to move in the same direction as the shifting barrel 276 so that the third cam assembly 261b moves between its first and second positions (or vice versa).

It will be appreciated that the arrangement is such that first cam assembly 260 starts to move immediately with the shifting rod arrangement 278, whereas the angular positions of first cylindrical contact member 312a and the second cylindrical contact member 312b cause the second cam assembly 261a and the third cam assembly 261b to move later. In general, the cam assemblies are arranged to move in a sequence that matches the firing sequence of the cylinders associated with the cam assemblies. Accordingly, as the cylinders of the cam assemblies 260, 261a, 261b having a firing sequence of 1 -2, - 3, the cam assembly 260 moves first, the cam assembly 261a second, and the cam assembly 261a third. It will be appreciated, that the shifting rod arrangement 278, having moved, may be stationary when contact between the first contact surface 304 or the second contact surface 306 of the first contact platform 295 and the first cylindrical contact member 312a causes the second cam assembly 261 to move and contact between the first contact surface 304 or the second contact surface 306 of the second contact platform 297 and the second cylindrical contact member 312b causes the third cam assembly 261b to move.

Although in this example, both sub rods 278a and 278b of the shifting rod arrangement 278 move when the shifting barrel 276 moves, as an alternative, only one of them may move, say rod 278b, the other rod serving as a sliding support for the components 282, 284, 286 and 288.

The above embodiments are to be understood as illustrative examples of the invention only. Further embodiments of the invention are envisaged.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A cam shifting arrangement for shifting at least a first cam piece (11, 161a, 161b) axially along a camshaft (7, 157) of a valve train assembly (5, 150) of an internal combustion engine to selectively position the cam piece (11, 161a, 161b) in at least a first axial position or a second axial position on the cam shaft (7, 157), the shifting arrangement comprising:
a shifting member (51, 174) arranged inside an inner bore of the camshaft (7, 157) substantially parallel with the cam shaft (7, 157) and moveable to cause the first cam piece (11, 161a, 161b) to be moved between the first axial position and the second axial position, wherein, the shifting member (51, 174) comprises a first contact surface (53c, 193c) which following the shifting member (51, 174) being moved in a first direction contacts the first cam piece (11, 161a, 161b) to cause the first cam piece (11, 161a, 161b) to be moved from the first axial position to the second axial position and a second contact surface (53d, 193d) which following the shifting member (51, 174) being moved in a second direction contacts the first cam piece (11, 161a, 161b) to cause the first cam piece (11, 161a, 161b) to be moved from the second axial position to the first axial position, **characterised in that** the shifting member (51, 174) does not rotate and that the first (53c, 193c) and second (53d, 193d) contact surfaces are angled across an outer surface of the shifting member (51, 174) in opposite senses so that at one end the first (53c, 193c) and second (53d, 193d) contact surfaces are closer together than they are at another end.

2. A cam shifting arrangement according to claim 1 wherein the first cam piece (11, 161a, 161b) comprises a first member (20, 176) that extends through a first guide slot (41, 178) defined by the camshaft (7, 157) into the inner bore of the camshaft (7, 157), wherein the first contact surface (53c, 193c) contacts the first member (20, 176) following the shifting member (51, 174) being moved in the first direction to cause the first cam piece (11, 161a, 161b) to be moved from the first axial position to the second axial position and wherein the second contact surface (53d, 193d) contacts the first member (20, 176) following the shifting member (51, 174) being moved in the second direction to cause the first cam piece (11, 161a, 161b) to be moved from the second axial position to the first axial position.

3. A cam shifting arrangement according to claim 2 wherein the first member (20, 176) is arranged to inhibit relative rotation between the first cam piece (11, 161a, 161b) and the cam shaft (7, 157).

4. A cam shifting arrangement according to any preceding claim, the shifting arrangement further comprising an actuator (170, 172) for acting on a first component (160a) mounted on the cam shaft (157) to move the first component (160a) axially between respective first and second positions of the first component (160a) on the cam shaft (157) and wherein the first component (160a) is arranged to act upon the shifting member (174) when the first component (160a) moves to cause the shifting member (174) to move whereby the shifting member (174) causes the first cam piece (161a, 161b) to move between the respective first and second positions of the first cam piece (161a, 161b) on the cam shaft (157).

5. The cam shifting arrangement according to claim 4 wherein the actuator (170, 172) comprises a pin (172) for engaging a groove (175) formed in the first component (160a) to cause the first component (160a) to move between the respective first and second positions.

6. The cam shifting arrangement of claim 4 or 5 wherein the first component (160a) comprises a second member (176) that comprises a portion (176b) that extends through a second guide groove (178) defined by the camshaft (157) into the inner bore of the camshaft (157) for acting on the shifting member (174) to move the shifting member (174).

7. The cam shifting arrangement of claim 5 or 6 wherein the shifting member (174) comprises a pair of opposing ridges (190a, 190b) that each extends around a circumference of the shifting member (174) and wherein the portion (176b) is located between the pair of opposing ridges (190a, 190b) and acts on one or other of the ridges (190a, 190b) when the first component (160a) moves along the cam shaft (157) to cause the shifting member (174) to move.

8. The cam shifting arrangement of any of claims 4 to 7 wherein the first component (160a) is a further cam piece.

9. A cam shifting arrangement according to any preceding claim wherein the at least a first cam piece (11) comprises an axial positioning pin (46) and the cam shaft (7) comprises first (48) and second (49) formations, and wherein, when the at least a first cam piece (11) is in the first position the positioning pin (46) engages the first formation (48) and when the at least a first cam piece (11) is in the second position the positioning pin (46) engages the second formation (49).

10. A cam shifting arrangement according to any preceding claim wherein the first (53c) and second (53d) contact surfaces each tapers in height along its length.

11. A valve train assembly comprising a cam shifting arrangement according to any preceding claim.

## Patentansprüche

1. Nockenverschiebeanordnung zum Verschieben zumindest eines ersten Nockenstücks (11, 161a, 161b) axial entlang einer Nockenwelle (7, 157) einer Ventiltriebanordnung (5, 150) eines Verbrennungsmotors, um das Nockenstück (11, 161a, 161b) wahlweise in zumindest eine erste axiale Position oder eine zweite axiale Position auf der Nockenwelle (7, 157) zu bringen, wobei die Verschiebeanordnung Folgendes umfasst:
ein Verschiebeelement (51, 174), das im Inneren einer Innenbohrung der Nockenwelle (7, 157) im Wesentlichen parallel zu der Nockenwelle (7, 157) angeordnet und so bewegbar ist, dass das erste Nockenstück (11, 161a, 161b) dazu gebracht wird, zwischen der ersten axialen Position und der zweiten axialen Position bewegt zu werden, wobei das Verschiebeelement (51, 174) eine erste Kontaktoberfläche (53c, 193c), die nach dem Bewegen des Verschiebeelement (51, 74) in eine erste Richtung mit dem ersten Nockenstück (11, 161a, 161b) in Kontakt tritt, um das erste Nockenstück (11, 161a, 161b) dazu zu bringen, von der ersten axialen Position in die zweite axiale Position bewegt zu werden, und eine zweite Kontaktoberfläche (53d, 193d) umfasst, die nach dem Bewegen des Verschiebeelement (51, 174) in eine zweite Richtung mit dem ersten Nockenstück (11, 161a, 161b) in Kontakt tritt, um das erste Nockenstück (11, 161a, 161b) dazu zu bringen, von der zweiten axialen Position in die erste axiale Position bewegt zu werden, **dadurch gekennzeichnet, dass** das Verschiebeelement (51, 174) sich nicht dreht und dass die erste (53c, 193c) und die zweite (53d, 193d) Kontaktoberfläche über eine Außenfläche des Verschiebeelements (51, 174) gegensinnig abgewinkelt sind, sodass an einem Ende die erste (53c, 193c) und die zweite (53d, 193d) Kontaktoberfläche näher aneinander liegen als an dem anderen Ende.

2. Nockenverschiebeanordnung nach Anspruch 1, wobei das erste Nockenstück (11, 161a, 161b) ein erstes Element (20, 176) umfasst, das sich durch einen ersten Führungsschlitz (41, 178), der durch die Nockenwelle (7, 157) definiert ist, in die Innenbohrung der Nockenwelle (7, 157) erstreckt, wobei die erste Kontaktoberfläche (53c, 193c) mit dem ersten Element (20, 176) in Kontakt tritt, nachdem das Verschiebeelement (51, 174) in die erste Richtung bewegt wurde, um das erste Nockenstück (11, 161a, 161b) dazu zu bringen, aus der ersten axialen Position in die zweite axiale Position bewegt zu werden, und wobei die zweite Kontaktoberfläche (53d, 193d) mit dem ersten Element (20, 176) in Kontakt tritt, nachdem das Verschiebeelement (51, 174) in die zweite Richtung bewegt wurde, um das erste Nockenstück (11, 161a, 161b) dazu zu bringen, aus der zweiten axialen Position in die erste axiale Position bewegt zu werden.

3. Nockenverschiebeanordnung nach Anspruch 2, wobei das erste Element (20, 176) angeordnet ist, eine relative Drehung zwischen dem ersten Nockenstück (11, 161a, 161b) und der Nockenwelle (7, 157) zu behindern.

4. Nockenverschiebeanordnung nach einem der vorstehenden Ansprüche, wobei die Verschiebeanordnung weiter einen Aktor (170, 172) zum Einwirken auf ein erstes Bauteil (160a) umfasst, das auf der Nockenwelle (157) angebracht ist, um das erste Bauteil (160a) axial zwischen jeweils der ersten und der zweiten Position des ersten Bauteils (160a) auf der Nockenwelle (157) zu bewegen, und wobei das erste Bauteil (160a) angeordnet ist, auf das Verschiebeelement (174) einzuwirken, wenn das erste Bauteil (160a) sich bewegt, um das Verschiebeelement (174) dazu zu bringen, sich zu bewegen, wodurch das Verschiebeelement (174) das erste Nockenstück (161a, 161b) dazu bringt, sich zwischen jeweils der ersten und der zweiten Position des ersten Nockenstücks (161a, 161b) auf der Nockenwelle (157) zu bewegen.

5. Nockenverschiebeanordnung nach Anspruch 4, wobei der Aktor (170, 172) einen Stift (172) zum Herstellen eines Eingriffs mit einer Nut (175) umfasst, die in dem ersten Bauteil (160a) ausgebildet ist, um das erste Bauteil (160a) dazu zu bringen, sich zwischen jeweils der ersten und der zweiten Position zu bewegen.

6. Nockenverschiebeanordnung nach Anspruch 4 oder 5, wobei das erste Bauteil (160a) ein zweites Element (176) umfasst, das einen Abschnitt (176b) umfasst, der sich zum Einwirken auf das Verschiebeelement (174), um das Verschiebeelement (174) zu bewegen, durch eine zweite Führungsnut (178), die durch die Nockenwelle (157) definiert ist, in die Innenbohrung der Nockenwelle (157) erstreckt.

7. Nockenverschiebeanordnung nach Anspruch 5 oder 6, wobei das Verschiebeelement (174) ein Paar entgegengesetzte Stege (190a, 190b) umfasst, die sich jeweils um einen Umfang des Verschiebeelements (174) erstrecken, und wobei der Abschnitt (176b) sich zwischen dem Paar entgegengesetzter Stege (190a, 190b) befindet und auf den einen oder den anderen Steg (190a, 190b) einwirkt, wenn das erste Bauteil (160a) sich entlang der Nockenwelle (157) bewegt, um das Verschiebeelement (174) dazu zu bringen, sich zu bewegen.

8. Nockenverschiebeanordnung nach einem der Ansprüche 4 bis 7, wobei das erste Bauteil (160a) ein weiteres Nockenstück ist.

9. Nockenverschiebeanordnung nach einem der vorstehenden Ansprüche, wobei das zumindest eine erste Nockenstück (11) einen Axialpositionierungsstift (46) umfasst und die Nockenwelle (7) erste (48) und zweite (49) Herausbildungen umfasst und wobei der Positionierungsstift (46) die erste Herausbildung (48) in Eingriff nimmt, wenn das zumindest eine erste Nockenstück (11) in der ersten Position ist, und der Positionierungsstift (46) die zweite Herausbildung (49) in Eingriff nimmt, wenn das zumindest eine erste Nockenstück (11) in der zweiten Position ist.

10. Nockenverschiebeanordnung nach einem der vorstehenden Ansprüche, wobei sich die Höhe der ersten (53c) und der zweiten (53d) Kontaktoberfläche jeweils entlang ihrer Länge verjüngt.

11. Ventiltriebanordnung, umfassend eine Nockenverschiebeanordnung nach einem der vorstehenden Ansprüche.

## Revendications

1. Arrangement de décalage de came pour décaler au moins un premier élément faisant office de came (11, 161a, 161b) en direction axiale le long d'un arbre à cames (7, 157) d'un assemblage de train de soupape (5, 150) d'un moteur à combustion interne pour positionner de manière sélective l'élément faisant office de came (11, 161a, 161b) dans au moins une première position axiale ou une seconde position axiale sur l'arbre à cames (7, 157), l'arrangement de décalage comprenant :
un membre de décalage (51, 174) disposé à l'intérieur d'un alésage interne de l'arbre à cames (7, 157) essentiellement parallèlement à l'arbre à cames (7, 157) et en mobilité pour déclencher le déplacement du premier élément faisant office de came (11, 161a, 161b) entre la première position axiale et la seconde position axiale, dans lequel le membre de décalage (51, 174) comprend une première surface de contact (53c, 193c) qui, après le déplacement du membre de décalage (51, 174) dans une première direction, entre en contact avec le premier élément faisant office de came (11, 161a, 161b) pour déclencher le déplacement du premier élément faisant office de came (11, 161a, 161b) depuis la première position axiale jusqu'à la seconde position axiale, et une seconde surface de contact (53d, 193d) qui, après le déplacement du membre de décalage (51, 174) dans une seconde direction, entre en contact avec le premier élément faisant office de came (11, 161a, 161b) pour déclencher le déplacement du premier élément faisant office de came (11, 161a, 161b) depuis la seconde position axiale jusqu'à la première position axiale, **caractérisé en ce que** le membre de décalage (51, 174) n'est pas rotatif, et **en ce que** la première (53c, 193c) et la seconde (53d, 193d) surfaces de contact forment des angles à travers une surface externe du membre de décalage (51, 174) dans des sens opposés, d'une manière telle qu'à une extrémité, la première (53c, 193c) et la seconde (53d, 193d) surfaces de contact sont plus proches l'une de l'autre qu'elles ne le sont à une autre extrémité.

2. Arrangement de décalage de came selon la revendication 1, dans lequel le premier élément faisant office de came (11, 161a, 161b) comprend un premier membre (20, 176) qui s'étend à travers une première fente de guidage (41, 178) définie par l'arbre à cames (7, 157) jusque dans l'alésage interne de l'arbre à cames (7, 157), dans lequel la première surface de contact (53c, 193c) entre en contact avec le premier membre (20, 176) après le déplacement du membre de décalage (51, 174) dans la première direction, pour déclencher le déplacement du premier élément faisant office de came (11, 161a, 161b) depuis la première position axiale jusqu'à la seconde position axiale, et dans lequel la seconde surface de contact (53d, 193d) entre en contact avec le premier membre (20, 176) après le déplacement du membre de décalage (51, 174) dans la seconde direction, pour déclencher le déplacement du premier élément faisant office de came (11, 161a, 161b) depuis la seconde position axiale jusqu'à la première position axiale.

3. Arrangement de décalage de came selon la revendication 2, dans lequel le premier membre (20, 176) est conçu pour empêcher une rotation relative entre le premier élément faisant office de came (11, 161a, 161b) et l'arbre à cames (7, 157).

4. Arrangement de décalage de came selon l'une quelconque des revendications précédentes, l'arrangement de décalage comprenant en outre un actionneur (170, 172) pour agir sur un premier composant (160a) monté sur l'arbre à cames (157) pour déplacer le premier composant (160a) en direction axiale entre des première et seconde positions respectives du premier composant (160a) sur l'arbre à cames (157), et dans lequel le premier composant (160a) est conçu pour agir sur le membre de décalage (174) lorsque le premier composant (160a) se déplace pour déclencher le déplacement du membre de décalage (174), si bien que le membre de décalage (174) déclenche le déplacement du premier élément faisant office de came (161a, 161b) entre les première et seconde positions respectives du premier élément faisant office de came (161a, 161b) sur l'arbre à cames (157).

5. Arrangement de décalage de came selon la revendication 4, dans lequel l'actionneur (170, 172) comprend une broche (172) pour son insertion dans une rainure (175) formée dans le premier composant (160a) pour déclencher le déplacement du premier composant (160a) entre les première et seconde positions respectives.

6. Arrangement de décalage de came selon la revendication 4 ou 5, dans lequel le premier composant (160a) comprend un second membre (176) qui comprend une portion (176b) qui s'étend à travers une seconde rainure de guidage (178) définie par l'arbre à cames (157) dans l'alésage interne de l'arbre à cames (157) pour agir sur le membre de décalage (174) afin de déplacer le membre de décalage (174).

7. Arrangement de décalage de came selon la revendication 5 ou 6, dans lequel le membre de décalage (174) comprend une paire de nervures opposées (190a, 190b) qui chacune s'étend autour d'une circonférence du membre de décalage (174), et dans lequel la portion (176b) est située entre la paire de nervures opposées (190a, 190b) et agit sur l'une ou l'autre des nervures (190a, 190b) lorsque le premier composant (160a) se déplace le long de l'arbre à cames (157) pour déclencher le déplacement du membre de décalage (174).

8. Arrangement de décalage de came selon l'une quelconque des revendications 4 à 7, dans lequel le premier composant (160a) est un élément supplémentaire faisant office de came.

9. Arrangement de décalage de came selon l'une quelconque des revendications précédentes, dans lequel ledit au moins un premier élément faisant office de came (11) comprend une broche de positionnement axial (46) et l'arbre à cames (7) comprend une première (48) et une seconde (49) formations, et dans lequel lorsque ledit au moins un premier élément faisant office de came (11) se trouve dans la première position, la broche de positionnement (46) entre en contact avec la première formation (48), et lorsque ledit au moins un premier élément faisant office de came (11) se trouve dans la seconde position, la broche de positionnement (46) entre en contact avec la seconde formation (49).

10. Arrangement de décalage de came selon l'une quelconque des revendications précédentes, dans lequel la première (53c) et la seconde (53d) surfaces de contact rétrécissent chacune en hauteur sur leur longueur.

11. Assemblage de train de soupape comprenant un arrangement de décalage de came selon l'une quelconque des revendications précédentes.
